# FASCICULE DE BREVET EUROPEEN

(11) **EP 2 633 145 B1**
(45) Date de publication et mention de la délivrance du brevet: **16.07.2014**
(21) Numéro de dépôt: 10793277.4
(22) Date de dépôt: 27.10.2010
(51) Int. Cl.: E06B 5/18

(54) **PORTE ÉTANCHE ET COUPE FEU**
HERMETIC FIRE DOOR
HERMETISCHE FEUERSCHUTZTÜR

(43) Date de publication de la demande: 04.09.2013
(73) Titulaire: Baumert Technologies (Société Par Actions Simplifiée Unipersonnelle), 67150 Schaeffersheim (FR)
(72) Inventeur: BAUMERT, Bernard, F-67150 Schaeffersheim (FR)
(74) Mandataire: Nuss, Laurent
(86) Numéro de dépôt international: PCT/FR2010/052307
(87) Numéro de publication internationale: WO 2012/056117

(56) Documents cités:
- EP-A1- 0 076 025
- EP-A1- 0 294 265
- DE-A1- 2 639 691
- DE-B3-102008 040 303

## Description

La présente invention concerne le domaine des portes étanches et coupe feu fermant une ouverture dans un bâtiment ou édifice de haute sécurité, plus particulièrement un bâtiment de haute sécurité de la filière nucléaire, et a pour objet une porte étanche et coupe feu.

On sait qu'une porte étanche fermant une ouverture d'entrée/sortie dans un local ou servant de porte de cloisonnement à l'intérieur d'un bâtiment de haute sécurité tel qu'une centrale nucléaire, est généralement étanche, d'une part à l'air ou autre fluide gazeux, en créant une isolation atmosphérique empêchant, plus particulièrement, tout risque de contamination de l'air lié à l'activité nucléaire et, d'autre part, à l'eau en protégeant le bâtiment contre une inondation ou une montée des eaux rapide.

Une telle porte étanche est également prévue habituellement pour lutter contre la propagation des incendies dans les bâtiments. Pour cela, elle est conçue de manière à obtenir une stabilité mécanique au feu, une étanchéité aux flammes, aux gaz chauds et aux fumées et une isolation thermique, ce pendant une durée déterminée de l'exposition au feu de l'un des côtés de la porte.

L'isolation thermique d'une porte est l'aptitude de cette dernière à résister à une exposition au feu de l'un de ses côtés sans le transmettre ou en limitant sa transmission, par suite d'un transfert de chaleur important, par propagation, rayonnement ou conduction, depuis le côté exposé jusqu'au côté non exposé afin que ce dernier ne s'enflamme pas, ni aucun matériau ou élément se trouvant à proximité. C'est encore l'aptitude de la porte à résister au feu sur l'un de ses côtés pour qu'une protection soit assurée, le cas échéant, pour les personnes situées dans le voisinage de la porte, côté non exposé.

Une telle porte étanche et coupe feu comprend un dormant et au moins un ouvrant généralement monté pivotant sur le dormant grâce à au moins une paumelle dont une partie est fixée sur l'un des petits côtés ou chant de l'ouvrant. En outre, l'ouvrant comporte usuellement deux grandes faces et des petites faces formant le chant de l'ouvrant dans lequel est habituellement pratiquée une feuillure en L apte à recevoir le dormant. Par ailleurs l'ouvrant est apte à être appliqué, en position de fermeture de la porte, contre le dormant, qui vient se plaquer contre le fond de la feuillure, par l'intermédiaire de joints d'étanchéité assurant notamment l'étanchéité de la porte aux fluides liquides ou gazeux et au feu entre l'ouvrant et le dormant.

D'autre part, l'ouvrant est généralement constitué par une structure de remplissage et d'isolation thermique prise entre deux plaques métalliques rigides, du type tôle en acier, assurant l'ossature de la porte et formant chacune l'une des grandes faces de l'ouvrant.

Pour déterminer si une telle porte remplie ces conditions de stabilité, d'étanchéité et d'isolation thermique au feu, il est procédé à des contrôles au cours d'essais. Concernant la stabilité de la porte au feu, ces contrôles ont notamment pour but de constater ou non l'apparition de fissures ou d'ouvertures dans la porte et, si tel est le cas, de vérifier si ces dernières dépassent des dimensions requises. Concernant l'étanchéité de la porte, ces contrôles ont notamment pour but de mesurer la durée au bout de laquelle un tampon de coton appliqué sur la grande face non exposée de l'ouvrant de la porte s'enflamme. Enfin, concernant l'isolation thermique, l'élévation de température sur la grande face non exporée de l'ouvrant ne doit pas dépasser de plus de 140° C la température moyenne initiale, avec une élévation de température maximale, en tout point de l'ouvrant, limitée à 180° C et une élévation de température en tout point du cadre dormant ne devant pas dépasser, selon le degré de classification, 180° C.

Or, on observe sur les portes actuelles étanches et coupe feu des défaillances au niveau de leur capacité à empêcher ou à limiter fortement la transmission de chaleur depuis le côté exposé vers le côté non exposé de la porte et notamment sur les portes installées dans les bâtiments de haute sécurité tels que les bâtiments de centrale nucléaire. En effet, les mesures de température effectuées sur le côté non exposé de la porte, notamment sur la grande face de l'ouvrant et plus particulièrement au niveau des deux coins supérieurs de ce dernier, montrent que la température ponctuelle dépasse largement les valeurs limites précitées imposées par la classification correspondante en matière d'isolation thermique.

Le document EP0294265A1 a pour objet une porte coupe-feu améliorée comprenant un dormant et un ouvrant qui comporte deux parements verticaux rectangulaires parallèles, entre lesquels est disposé un matériau isolant thermiquement constitué par une nappe de fibres céramiques. Chaque parement est constitué par deux plaques d'acier minces percées de trous répartis de façon régulière et emboutis en constituant des bords recourbés et une âme en matériau composite formé d'un liant hydraulique de ciment et de fibres de renfort cellulosiques sans amiante. L'âme fixe les plaques l'une à l'autre par ancrage des bords recourbés dans cette dernière. Il comporte en outre un cadre de structure, formant l'ossature, entourant le matériau isolant, formé par deux profilés en U horizontaux et deux profilés en U verticaux.

Toutefois, une porte coupe feu du type celle divulguée par ce document EP0294265A1, dont le cadre central s'étend en périphérique du matériau isolant, et les parements exercent une fonction coupe-feu, ne permet pas d'obtenir un ouvrant capable de résister à des pressions élevées de plusieurs mètres de colonne d'eau s'appliquant sur l'un ou l'autre des côtés de l'ouvrant pour protéger le matériau isolant thermiquement. En effet, avec une telle porte, en cas de pressions élevées, les panneaux seraient fortement dégradés ou enfoncés de sorte que le matériau isolant au centre de l'ouvrant serait exposé et également dégradé et la structure de cadre ne permettrait pas d'assurer une rigidité suffisante de l'ouvrant.

Le document DE102008040303 B3 a pour objet une porte de sécurité comprenant un ouvrant, avec un système d'alarme, comprenant trois plaques délimitant deux espaces internes renfermant un matériau anti-effraction et une couche d'isolant 10 recouvrant l'un des côtés de l'ouvrant.

Cependant, la porte de sécurité divulguée par ce document DE102008040303 B3, adaptée pour empêcher son effraction, n'est pas prévue pour empêcher, lors d'une exposition au feu de l'un de ses côtés, des élévations de températures excessives de son autre côté, non exposé, pendant une durée importante.

Le document DE2639691A1 concerne une porte comprenant un ouvrant dans le chant duquel est pratiquée une feuillure et qui comprend un cadre externe renfermant une structure en réseau se présentant sous la forme d'une plaque comportant des évidements carrés.

Toutefois, une porte du type de celle divulguée par le document DE2639691A1 n'est pas adaptée pour empêcher, lors d'une exposition au feu de l'un de ses côtés, des élévations de températures excessives de son autre côté, non exposé, pendant une durée importante. En outre la structure de l'ouvrant ne permet pas de conférer une résistance suffisante de la porte, en, cas d'inondation ou de montée des eaux rapides, à des pressions élevées de plusieurs mètres de colonne d'eau sur l'un ou l'autre de ses côtés.

Le document EP0076025A1 a pour objet une porte coupe feu comprenant un noyau central en acier ondulé pris en sandwich entre deux panneaux de ciment renforcé par des fibres et comportant sur leur face externe une couche de haute densité, entre lesquels panneaux est créé un intervalle d'air recevant ledit noyau. Il comprend en outre une ossature externe métallique en forme de cadre entourant les deux panneaux et étant thermo soudé au noyau central.

Cependant, dans la porte de ce document EP0076025A1, l'ossature externe est directement exposée aux flammes et à la chaleur en cas d'incendie de sorte que les rayonnements de chaleur se propagent jusque dans le noyau central, ce qui ne permet pas d'empêcher, lors d'une exposition au feu de l'un de ses côtés, des élévations de températures excessives de son autre côté, non exposé, pendant une durée importante.

La présente invention a pour but de pallier ces inconvénients en proposant une porte pivotant étanche à un fluide gazeux ou liquide et coupe feu pour un bâtiment où édifice, plus particulièrement pour un bâtiment de la filière nucléaire, apte à empêcher, lors d'une exposition au feu de l'un de ses côtés, des élévations de température excessives de son autre côté, non exposé, pendant une durée permettant de répondre aux règlementations actuelles les plus sévères, voire au-delà, ce tout en conférant à la porte, plus particulièrement à l'ouvrant, une résistance à des pressions élevées de plusieurs mètres de colonne d'eau sur l'un et l'autre de ses deux côtés, par exemple en cas d'inondation ou de montée des eaux.

A cet effet, la présente invention a pour objet une porte étanche et coupe feu pour la fermeture d'une ouverture dans un bâtiment ou édifice comprenant, d'une part, un dormant et au moins un ouvrant monté pivotant sur ce dernier grâce à au moins une paumelle, comprenant deux grandes faces opposées et parallèles entre elles, à savoir une première grande face et une seconde grande face, et étant délimité latéralement par des petites faces, formant le chant de l'ouvrant, perpendiculaires auxdites grandes faces, et d'autre part, des moyens d'étanchéité assurant l'étanchéité entre lesdits dormant et ouvrant à l'état de fermé de la porte, caractérisée en ce que :
- le ou chaque ouvrant comprend une ossature centrale métallique entourant un espace vide apte à recevoir ou à former un isolant thermique et étant prise entre deux panneaux isolant d'isolation thermique, à savoir un premier panneau situé côté première grande face et un second panneau situé côté seconde grande face, comportant chacun deux grands côtés s'étendant, à l'état monté, parallèlement auxdites grandes faces et des petits côtés s'étendant parallèlement au chant de l'ouvrant et étant réalisés à partir d'un matériau de faible conductivité ou diffusivité thermique tel que, par exemple, un matériau composite ou un matériau minéral, préférentiellement du silicate de calcium,
- lesdits panneaux sont aptes à empêcher, en cas d'exposition au feu de l'une desdites grandes faces, la propagation des rayonnements de chaleur, depuis cette dernière vers l'autre desdites grandes faces,
- l'ossature centrale est constituée par deux plaques métalliques rigides, de préférence du type tôle en acier, maintenues écartées l'une de l'autre, parallèlement entre elles et aux première et seconde grandes faces de l'ouvrant, de sorte à laisser un espace vide entre ces dernières pour former ou recevoir l'isolant thermique, à savoir une première plaque située côté première grande face et une seconde plaque située côté seconde grande face de l'ouvrant, le premier panneau recouvrant la face externe de la première plaque et le second panneau recouvrant la face externe de la seconde plaque,
- les grands côtés du premier panneau sont de dimensions supérieures à celles des grands côtés du second panneau de sorte que, à l'état monté, le premier panneau s'étend latéralement au-delà du second panneau, ce qui a pour effet de former une feuillure dans le chant de l'ouvrant, côté seconde grande face de l'ouvrant, ledit chant comportant alors, successivement depuis la seconde grande face, ladite feuillure et une partie du chant restante joignant ladite feuillure à la première grande face, ladite feuillure présentant un profil en L comprenant une première face parallèle auxdites grandes faces de l'ouvrant et une seconde face perpendiculaire aux première et seconde grandes faces de l'ouvrant, ladite feuillure étant prévue pour recevoir le dormant, qui comprend une feuillure complémentaire, lors de la fermeture de la porte,
- la seconde plaque se prolonge latéralement par une cornière ou une équerre en L comprenant une première aile et une seconde aile, la première aile étant plaquée et fixée sur la face interne de la première plaque de manière à assurer l'assemblage entre lesdites première et seconde plaques métalliques,
- ladite cornière prolonge alors, à l'état monté, la seconde plaque au-delà du second panneau de sorte que la seconde aile de la cornière forme une partie de la seconde face de la feuillure et que la première aile de la cornière forme au moins une partie de la première face de la feuillure,
- le cas échéant, ledit ouvrant comprend au moins une rupture de pont thermique.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :

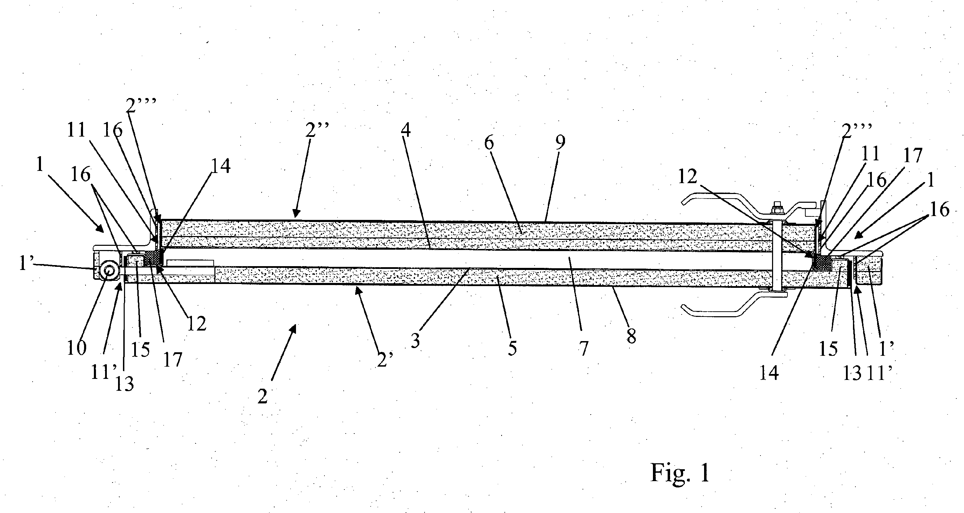

- la figure 1 montre une vue en coupe transversale d'une porte selon la présente invention dans un mode de réalisation préférentiel,
- la figure 2 montre une partie de la porte représentée sur la figure 1, côté poignées, avec agrandissement,
- la figure 3 montre une partie de la porte représentée sur la figure 1, côté paumelles, avec agrandissement.

Les figures montrent une porte pivotante étanche, notamment à un fluide liquide ou gazeux, et coupe feu pour la fermeture d'une ouverture dans un bâtiment ou édifice, plus particulièrement un bâtiment de haute sécurité tel qu'une centrale nucléaire, comprenant, d'une part, un dormant 1 et au moins un ouvrant 2 comprenant deux grandes faces 2' et 2" opposées et parallèles entre elles, à savoir une première grande face 2' et une seconde grande face 2", et étant délimité latéralement par des petites faces 2"', formant le chant de l'ouvrant 2, perpendiculaires auxdites grandes faces 2' et 2", et d'autre part, des moyens d'étanchéité 16, 17 assurant l'étanchéité entre le dormant 1 et l'ouvrant 2 à l'état de fermé de la porte.

Conformément à la présente invention, le ou chaque ouvrant 2 comprend une ossature 3, 4 métallique, de préférence en acier, entourant un espace vide apte à recevoir ou à former un isolant thermique 7 et étant prise entre deux couches 5 et 6 d'isolation thermique, s'étendant parallèlement aux grandes faces 2' et 2" de l'ouvrant 2, à savoir une première couche 5 située côté première grande face 2' et une seconde couche 6 située côté seconde grande face 2". Les première et seconde couches 5 et 6 sont aptes à empêcher, en cas d'exposition au feu de l'une desdites grandes faces 2' et 2", la propagation des rayonnements de chaleur, depuis cette dernière vers l'autre desdites grandes faces 2' ou 2".

De préférence, le dormant 1 peut être métallique, de préférence en acier, ou réalisé à partir de tout autre matériau assurant sa rigidité, et comporte une face visible sur l'un des côtés de la porte, à l'état fermé de cette dernière, qui peut avantageusement être recouverte, au moins partiellement, sur tout ou partie du pourtour du dormant 1, plus particulièrement dans le cas où l'ouvrant 2 et le dormant 1 comportent chacun une feuillure respectivement 11 et 11' complémentaires, une couche de matériau isolant 1' possédant un pouvoir isolant thermique, ce afin de limiter les élévations de température sur ladite face visible du dormant 1

On notera que la partie du bâtiment ou de l'édifice dans laquelle est montée la porte, selon la présente invention, n'est pas représentée sur les figures annexées.

En outre, le cas échéant, l'ouvrant 2 peut comprendre au moins une rupture de pont thermique, c'est-à-dire tout moyen permettant de supprimer tout court circuit thermique éventuel entre deux parties métalliques en contact l'une avec l'autre ou séparées sensiblement l'une de l'autre.

Dans une forme de réalisation préférentielle, l'isolant thermique peut être formé par l'espace vide et peut consister en de l'air 7 emprisonné dans ladite ossature 3, 4.

Dans une autre forme de réalisation, l'isolant thermique peut être rapporté et peut consister de préférence en de la laine de roche ou de verre ou autre matériau de faible conductivité ou diffusivité thermique remplissant au moins partiellement l'espace vide.

De manière à renforcer la rigidité et la stabilité de l'ouvrant 2, une structure de renfort, non représentée sur la figure, pouvant être constituée, par exemple, de barres métalliques rigides, de préférence en acier et de section transversale en oméga, peut être disposée et maintenue fixement dans l'espace vide de l'ossature 3, 4, le cas échéant, en partageant l'espace vide avec l'isolant thermique rapporté ou en étant intégré dans ce dernier.

Dans un mode de réalisation préférentiel de la présente invention, l'ossature peut être constitué par deux plaques 3 et 4 métalliques rigides, de préférence du type tôle rigide en acier, maintenues écartées l'une de l'autre, parallèlement entre elles et aux première et seconde grandes faces 2' et 2" de l'ouvrant 2, de sorte à laisser un espace vide entre ces dernières pour former ou recevoir l'isolant thermique 7, à savoir une première plaque 3 située côté première grande face 2' et une seconde plaque 4 située côté seconde grande face 2" de l'ouvrant 2.

Les barres métalliques peuvent être fixées sur l'une et/ou l'autre des faces respectives des plaques 3 et/ou 4 métalliques correspondantes, de préférence par soudage ou par collage.

D'autre part, de façon à renforcer encore l'isolation thermique de la porte, une couche de matière apte à faire obstacle au rayonnement de la chaleur provenant de la première ou de la seconde grande face 2' ou 2" peut être appliquée, par exemple par pulvérisation ou projection, sur l'une et/ou l'autre des faces internes respectives des première et seconde plaques 3 et 4.

Toujours dans un mode de réalisation préférentiel de la présente invention, la première couche 5 peut consister en un panneau isolant ou premier panneau recouvrant la face externe de la première plaque 3 et la seconde couche 6 peut également consister en un panneau isolant ou second panneau recouvrant la face externe de la seconde plaque 4.

En outre la face externe du premier panneau 5 peut être recouverte par un parement 8 métallique ou premier parement, de préférence du type tôle rigide en acier, de protection du premier panneau et la face externe du second panneau 6 peut être recouverte par un parement 9 métallique ou second parement, du type tôle en acier, de protection du second panneau.

Les premier et second panneaux 5 et 6 peuvent comporter chacun deux grands côtés s'étendant, à l'état monté, parallèlement aux grandes faces de l'ouvrant 2' et 2" et des petits côtés s'étendant parallèlement au chant 2"' de ce dernier.

De préférence, chaque panneau 5 ou 6 isolant peut être réalisé à partir d'un matériau de faible conductivité ou diffusivité thermique tel qu'un matériau composite ou un matériau minéral, préférentiellement du silicate de calcium ou peut être une plaque de plâtre.

Plus particulièrement, chaque panneau 5 ou 6 isolant peut être apte à contenir ou à retenir de l'eau susceptible d'absorber, en cas d'exposition au feu de l'un des côtés de la porte, la chaleur dégagée par ce dernier et de former par la même un obstacle supplémentaire à la propagation des rayonnements de chaleur du côté exposé vers le côté non exposé de la porte, et ce pendant un certain temps, jusqu'à évaporation totale de l'eau contenue dans le matériau isolant correspondant.

Parmi les matériaux aptes à contenir ou à retenir de l'eau, on pourra citer par exemple un matériau silico-calcaire, dont le panneau isolant résultant utilisé dans la présente invention comme premier ou second panneau 5 ou 6 isolant peut être une plaque silico-calcaire incombustible connue sous le nom et la marque enregistrées « PROMATECH-H » contenant environ 5 à 10% d'humidité relative à l'air.

Par ailleurs, le cas échéant, le matériau constituant la couche de matériau 1' du dormant 1 peut être identique au matériau constituant essentiellement les premier et second panneaux 5 et 6 de l'ouvrant 2.

Dans un mode de réalisation préférentiel de la porte selon la présente invention, le ou chaque ouvrant 2 peut être monté pivotant sur le dormant 1, grâce à au moins une paumelle 10 comportant une partie mobile fixée, de préférence, sur l'ouvrant 2 sur l'un des petits côtés du premier panneau 5 et une partie fixe fixée sur le dormant 1, à savoir notamment sur la face visible du dormant 1.

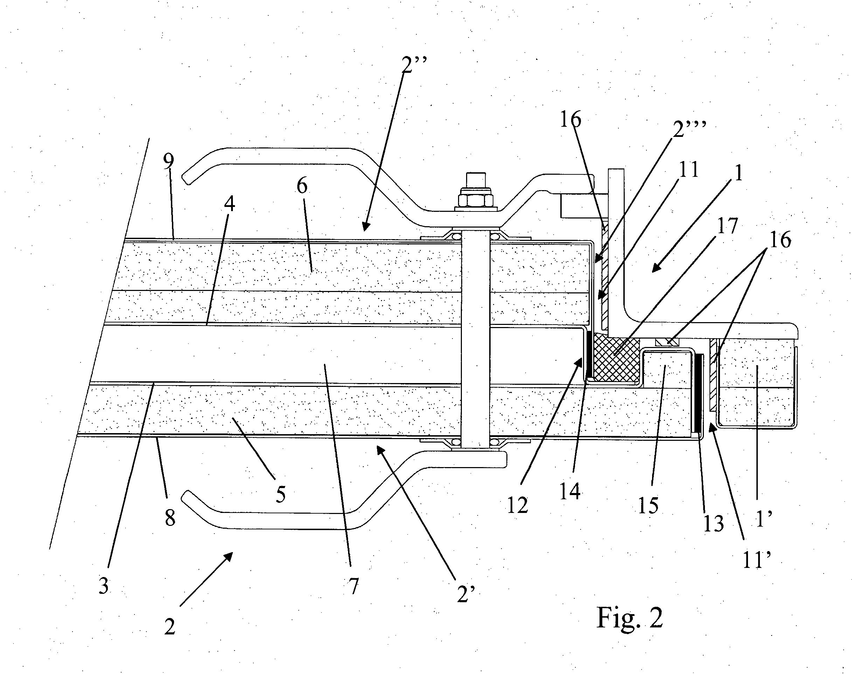

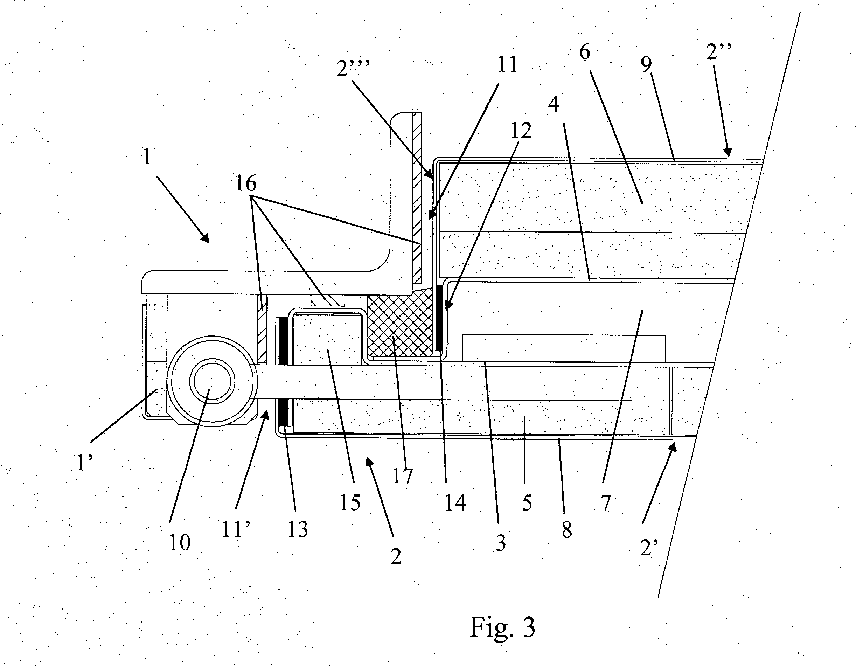

Si on se réfère maintenant, notamment, aux figures 2 et 3, on peut voir que les grands côtés du premier panneau 5 peuvent être de dimensions supérieures à celles des grands côtés du second panneau 6 de sorte que, à l'état monté, le premier panneau 5 s'étend latéralement au-delà du second panneau 6, ce qui a pour effet de former une feuillure 11 dans le chant 2"' de l'ouvrant 2, côté seconde grande face 2" de l'ouvrant 2. Le chant 2"' peut alors comporter, successivement depuis la seconde grande face 2", la feuillure 11 et une partie du chant 2"' restante joignant la feuillure 11 à la première grande face 2'.

De préférence, la feuillure 11 peut présenter un profil en L comprenant une première face parallèle aux grandes faces 2' et 2" de l'ouvrant 2 et une seconde face perpendiculaire aux première et seconde grandes faces 2' et 2" de l'ouvrant 2, ladite feuillure 11 étant prévue pour recevoir le dormant 1, qui comprend une feuillure 11' complémentaire, lors de la fermeture de la porte.

On peut voir également sur les figures que la seconde plaque 4 peut se prolonger latéralement par une cornière ou une équerre 12 en L, fixée sur ou intégré dans la seconde plaque 4, comprenant une première aile et une seconde aile, la première aile étant plaquée et fixée sur la face interne de la première plaque 3 de manière à assurer l'assemblage entre les première et seconde plaques 3 et 4 métalliques et de préférence l'étanchéité de l'espace vide compris entre ces dernières. La cornière 12 peut alors prolonger, à l'état monté, la seconde plaque 4 au-delà du second panneau 6 de sorte que la seconde aile de la cornière 12 forme une partie de la seconde face de la feuillure 11 en L et que la première aile de la cornière 12 forme au moins une partie de la première face de la feuillure 11 en L.

Par ailleurs, la première plaque 3 peut se prolonger latéralement pour recouvrir la partie du chant 2"' restante et le premier parement 8 peut recouvrir, au niveau de la partie du chant 2"' restante, la première plaque 3 par l'intermédiaire d'un premier joint d'étanchéité et de rupture de pont thermique 13 assurant une première rupture de pont thermique.

En outre, le second parement 9 peut recouvrir, au niveau de la seconde face de la feuillure 11, la seconde aile de la cornière 12 par l'intermédiaire d'un second joint d'étanchéité et de rupture de pont thermique 14 assurant une deuxième rupture de pont thermique.

Le bord interne de la première face de la feuillure 11 en L peut comporter un retour 15, de préférence réalisé essentiellement à partir du même matériau isolant que les premier et second panneaux 5 et 6. Un tel retour 15 peut être fixé sur ou intégré dans le premier panneau 5 au niveau de son bord interne. En outre, le retour 15 peut être recouvert par le prolongement latéral de la première plaque 3 de l'ossature 3, 4.

Le retour 15 peut être situé à distance de la seconde face de cette dernière de sorte à créer, dans une première fonction du retour, un espace de logement anti-écrasement dans la feuillure 11 permettant de loger et de maintenir en forme, entre le retour 15 et la seconde face de la feuillure 11, un joint d'étanchéité et d'isolation 17, de préférence du type mousse néoprène de caoutchouc synthétique ou autre mousse cellulaire résistante, notamment, au feu.

On entendra par maintenir en forme le joint d'étanchéité et d'isolation 17 dans la feuillure 11, la possibilité d'empêcher ce dernier, lors de la fermeture de la porte, d'être écrasé par son contact avec le dormant 1 en se dilatant latéralement et parallèlement aux grandes faces 2' et 2", et donc de perdre son efficacité d'étanchéité et d'isolation.

D'autre part, la partie du dormant 1 située en regard de la première face de la feuillure 11 peut comporter, préférentiellement, un joint d'étanchéité intumescent 16. Le retour 15 peut alors, dans une deuxième fonction, délimiter avec la partie du dormant 1 sur laquelle est fixée le joint d'étanchéité intumescent 16 un jeu d'expansion maximum de ce dernier permettant de limiter, en cas d'exposition au feu de la porte, le gonflement dudit joint 16 et d'empêcher par la même sa dégradation.

La présente invention peut également prévoir que d'autres joints d'étanchéité intumescents 16 soient disposés entre le dormant et le chant 2"' de l'ouvrant 2.

Ainsi, la porte selon la présente invention est apte à empêcher, lors d'une exposition au feu de l'un de ses côtés, des élévations de température excessives de son autre côté, non exposé, ce pendant une durée permettant de répondre aux exigences des règlementations actuelles les plus élevées concernant l'isolation thermique, en étant conforme plus particulièrement à la norme européenne EI1 (180° C), voire au-delà. En outre la porte présente également une étanchéité aux fluides de haut niveau, notamment à l'eau, en étant capable de résister à une pression d'au moins 6 m de colonne d'eau sur l'un ou l'autre de ses côtés.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention défini par les revendications.

## Revendications

1. Porte étanche et coupe feu pour la fermeture d'une ouverture dans un bâtiment ou édifice comprenant, d'une part, un dormant (1) et au moins un ouvrant (2), monté pivotant sur ce dernier grâce à au moins une paumelle (10), comprenant deux grandes faces (2', 2") opposées et parallèles entre elles, à savoir une première grande face (2') et une seconde grande face (2"), et étant délimité latéralement par des petites faces (2"'), formant le chant de l'ouvrant (2), perpendiculaires auxdites grandes faces, et d'autre part, des moyens d'étanchéité (16, 17) assurant l'étanchéité entre lesdits dormant et ouvrant à l'état de fermé de la porte, **caractérisée en ce que** :
- le ou chaque ouvrant (2) comprend une ossature (3, 4) centrale métallique entourant un espace vide apte à recevoir ou à former un isolant thermique (7) et étant prise entre deux panneaux isolant (5, 6) d'isolation thermique, à savoir un premier panneau (5) situé côté première grande face (2') et un second panneau (6) situé côté seconde grande face (2"), comportant chacun deux grands côtés s'étendant, à l'état monté, parallèlement auxdites grandes faces et des petits côtés s'étendant parallèlement au chant (2"') de l'ouvrant et étant réalisés à partir d'un matériau de faible conductivité ou diffusivité thermique tel que, par exemple, un matériau composite ou un matériau minéral, préférentiellement du silicate de calcium,
- lesdits panneaux (5, 6) sont aptes à empêcher, en cas d'exposition au feu de l'une desdites grandes faces (2', 2"), la propagation des rayonnements de chaleur, depuis cette dernière vers l'autre desdites grandes faces (2', 2"),
- l'ossature (3, 4) centrale est constituée par deux plaques (3) et (4) métalliques rigides, de préférence du type tôle en acier, maintenues écartées l'une de l'autre, parallèlement entre elles et aux première et seconde grandes faces (2',2") de l'ouvrant (2), de sorte à laisser un espace vide entre ces dernières pour former ou recevoir l'isolant thermique (7), à savoir une première plaque (3) située côté première grande face (2') et une seconde plaque (4) située côté seconde grande face (2") de l'ouvrant (2), le premier panneau (5) recouvrant la face externe de la première plaque (3) et le second panneau recouvrant la face externe de la seconde plaque (4),
- les grands côtés du premier panneau (5) sont de dimensions supérieures à celles des grands côtés du second panneau (6) de sorte que, à l'état monté, le premier panneau (5) s'étend latéralement au-delà du second panneau (6), ce qui a pour effet de former une feuillure (11) dans le chant (2"') de l'ouvrant (2), côté seconde grande face (2") de l'ouvrant (2), ledit chant (2"') comportant alors, successivement depuis la seconde grande face (2"), ladite feuillure (11) et une partie du chant (2"') restante joignant ladite feuillure (11) à la première grande face (2'), ladite feuillure (11) présentant un profil en L comprenant une première face parallèle auxdites grandes faces (2', 2") de l'ouvrant (2) et une seconde face perpendiculaire aux première et seconde grandes faces (2', 2") de l'ouvrant (2), ladite feuillure (11) étant prévue pour recevoir le dormant (1), qui comprend une feuillure (11') complémentaire, lors de la fermeture de la porte,
- la seconde plaque (4) se prolonge latéralement par une cornière ou une équerre (12) en L comprenant une première aile et une seconde aile, la première aile étant plaquée et fixée sur la face interne de la première plaque (3) de manière à assurer l'assemblage entre lesdites première et seconde plaques métalliques (3, 4),
- ladite cornière (12) prolonge alors, à l'état monté, la seconde plaque (4) au-delà du second panneau (6) de sorte que la seconde aile de la cornière forme une partie de la seconde face de la feuillure (11) et que la première aile de la cornière (12) forme au moins une partie de la première face de la feuillure (11),
- le cas échéant, ledit ouvrant (2) comprend au moins une rupture de pont thermique.

2. Porte, selon la revendication 1, **caractérisée en ce que** l'isolant thermique est formé par l'espace vide et consiste en de l'air (7) emprisonné dans ladite ossature (3, 4).

3. Porte, selon la revendication 1, **caractérisée en ce que** l'isolant thermique est rapporté et consiste en de la laine de roche ou de verre ou autre matériau de faible conductivité ou diffusivité thermique remplissant au moins partiellement l'espace vide.

4. Porte, selon l'une quelconque des revendications 1 à 3, **caractérisé en ce qu'**une structure de renfort, constituée par exemple de barres métalliques rigides, de préférence de section transversale en oméga, est disposée et maintenue fixement dans l'espace vide de l'ossature (3, 4), le cas échéant, en partageant ledit l'espace vide avec l'isolant thermique rapporté ou en étant intégré dans ce dernier.

5. Porte, selon l'une quelconque des revendications 1 à 4, **caractérisée en ce qu'**une couche de matière apte à faire obstacle au rayonnement de la chaleur provenant de la première ou de la seconde grande face (2') ou (2") est appliquée, par exemple par pulvérisation ou projection, sur l'une et/ou l'autre des faces internes respectives des première et seconde plaques métalliques (3) et (4).

6. Porte, selon l'une quelconque des revendications 1 à 5, **caractérisé en ce que** la face externe du premier panneau (5) est recouverte par un parement métallique ou premier parement (8), de préférence du type tôle en acier, de protection dudit premier panneau et la face externe du second panneau (6) est recouverte d'un parement métallique ou second parement (9), de préférence du type tôle en acier, de protection dudit second panneau.

7. Porte, selon l'une quelconque des revendications 1 à 6, **caractérisée en ce que** chaque panneau (5) ou (6) isolant est apte à contenir ou à retenir de l'eau susceptible d'absorber, en cas d'exposition au feu de l'un des côtés de la porte, la chaleur dégagée par ce dernier et de former par la même un obstacle supplémentaire à la propagation des rayonnements de chaleur du côté exposé vers le côté non exposé.

8. Porte, selon la revendication 7, **caractérisée en ce que** la première plaque (3) se prolonge latéralement pour recouvrir la partie du chant (2"') restante et **en ce que**, le cas échéant, d'une part, le premier parement (8) recouvre au niveau de ladite partie du chant (2"') restante ladite première plaque (3) par l'intermédiaire d'un premier joint d'étanchéité et de rupture de pont thermique (13) assurant une première rupture de pont thermique et, d'autre part, le second parement (9) recouvre au niveau de la seconde face de la feuillure (11) la seconde aile de la cornière (12) par l'intermédiaire d'un second joint d'étanchéité et de rupture de pont thermique (14) assurant une deuxième rupture de pont thermique.

9. Porte, selon l'une quelconque des revendications 1 à 8, **caractérisée en ce que** le bord interne de la première face de la feuillure (11) en L comporte un retour (15), de préférence réalisé essentiellement à partir du même matériau isolant que les premier et second panneau (5) et (6), ledit retour (15) étant situé à distance de la seconde face de la feuillure (11) de sorte à laisser un espace de logement anti-écrasement permettant de loger et de maintenir en forme, entre ledit retour (15) et la seconde face de la feuillure (11), un joint d'étanchéité et d'isolation (17), de préférence du type mousse néoprène de caoutchouc synthétique ou autre mousse cellulaire résistante, notamment, au feu.

10. Porte, selon la revendication 9, **caractérisée en ce que** la partie du dormant (1) située en regard de la première face de la feuillure (11) comporte un joint d'étanchéité intumescent (16), le retour (15) délimitant alors avec la partie du dormant (1) sur laquelle est fixée le joint d'étanchéité intumescent (16) un jeu d'expansion maximum de ce dernier permettant de limiter, en cas d'exposition au feu de la porte, le gonflement dudit joint (16) et d'empêcher sa dégradation.

11. Porte, selon l'une quelconque des revendications 1 à 10, **caractérisée en ce que** le dormant (1) est métallique, de préférence en acier, ou réalisé à partir de tout autre matériau assurant sa rigidité, et comporte une face visible sur l'un des côtés de la porte, à l'état fermé de cette dernière, qui est recouverte, au moins partiellement, sur tout ou partie du pourtour de l'ouverture de la porte, plus particulièrement dans le cas où l'ouvrant (2) et le dormant (1) comportent chacun une feuillure respectivement (11) et (11') complémentaires, une couche de matériau isolant (1') possédant un pouvoir isolant thermique.

## Patentansprüche

1. Abgedichtete Feuerschutztür zum Verschließen einer Öffnung in einem Bauwerk oder einem Gebäude, mit die einerseits einen feststehenden Teil (1) und zumindest einen zu öffnenden Teil (2) umfasst, der schwenkbar auf dem letzteren mit Hilfe von zumindest einem Scharnier (10) befestigt ist und zwei entgegengesetzte und parallel zueinander angeordnete Hauptflächen (2', 2") umfasst, nämlich eine erste Hauptfläche (2') und eine zweite Hauptfläche (2"), und seitlich durch Schmalseiten (2"') begrenzt ist, die die Kante des zu öffnenden Teils (2) unter einem rechten Winkel zu den Hauptflächen bilden, und andererseits Dichtungseinrichtungen (16, 17) umfasst, die die Abdichtung zwischen dem feststehenden Teil und dem zu öffnenden Teil im geschlossenen Zustand der Tür sicherstellen, **dadurch gekennzeichnet, dass**:
- der oder jeder zu öffnende Teil (2) ein zentrales metallisches Traggerüst (3, 4) umfasst, das einen Hohlraum umgibt, der zur Aufnahme von oder zur Bildung einer thermischen Isolation (7) ausgebildet ist und zwischen zwei Isolierplatten (5, 6) für eine thermische Isolation eingefasst ist, nämlich einer ersten Platte (5), die auf der Seite der ersten Hauptfläche (2') angeordnet ist, und einer zweiten Platte (6), die auf der Seite der zweiten Hauptfläche (2") angeordnet ist und jeweils zwei Hauptseiten aufweisen, die sich im montierten Zustand parallel zu den Hauptflächen erstrecken, und Schmalseiten umfassen, die sich parallel zur Kante (2"') des zu öffnenden Teils erstrecken, und aus einem Material mit geringer Wärmeleitung oder thermische Diffusion hergestellt sind, wie zum Beispiel durch ein Verbundmaterial oder ein mineralisches Material, vorzugsweise aus Kalziumsilikat hergestellt sind,
- die Isolierplatten (5, 6) in der Lage sind, im Fall einer Einwirkung eines Feuers auf eine der Hauptflächen (2', 2") die Ausbreitung von Wärmestrahlung von der letzteren auf die andere dieser Hauptflächen (2', 2") zu verhindern;
- das zentrale Traggerüst durch zwei starre Metallplatten (3, 4), vorzugsweise vom Stahlblechtyp gebildet ist, die auf Abstand voneinander und parallel zueinander und zu den ersten und zweiten Hauptflächen (2', 2") des zu öffnenden Teils (2) derart gehalten sind, dass ein zwischenliegender Leerraum zwischen den letzteren verbleibt, um eine thermische Isolation (7) zu bilden oder aufzunehmen, nämlich eine erste Platte (3), die auf der Seite der ersten Hauptfläche (2') angeordnet ist, und eine zweite Platte (4), die auf der Seite der zweiten Hauptfläche (2") des zu öffnenden Teils (2) angeordnet ist, wobei die erste Isolierplatte (5) die Außenfläche der ersten Platte (3) abdeckt und die zweite Isolierplatte die Außenfläche der zweiten Platte (4) abdeckt,
- die Hauptflächen der ersten Isolierplatte (5) Abmessungen aufweisen, die größer als die Hauptflächen der zweiten Isolierplatte (6) derart sind, dass im montierten Zustand die erste Isolierplatte (5) sich seitlich über die zweite Isolierplatte (6) hinaus erstreckt, was zur Folge hat, dass ein Falz (11) in der Kante (2"') des zu öffnenden Teils (2) auf der Seite der zweiten Hauptfläche (2") des zu öffnenden Teils (2) gebildet wird, wobei die Kante (2"') unter anderem aufeinanderfolgend ausgehend von der zweiten Hauptfläche (2") diesen Falz (11) und einen verbleibenden Kantenteil (2"') umfasst, der den Falz (11) mit der ersten Hauptfläche (2') verbindet, wobei der Falz (11) ein L-förmiges Profil aufweist, das eine erste Stirnseite parallel zu den Hauptflächen (2', 2") des zu öffnenden Teils (2) und eine zweite Fläche unter einem rechten Winkel zu den ersten und zweiten Hauptflächen (2', 2") des zu öffnenden Teils (2) umfasst, wobei der Falz (11) beim Schließen der Tür zur Aufnahme des feststehenden Teils (1) vorgesehen ist, der einen komplementären Falz (11') aufweist,
- die zweite Platte (4) seitlich über ein Winkelprofil oder einen Winkel (12) mit L-Form verlängert ist, der einen ersten Schenkel und einen zweiten Schenkel aufweist, wobei der erste Schenkel auf die Innenfläche der ersten Platte (3) aufgelegt und an dieser befestigt ist, um einen Zusammenbau zwischen den ersten und zweiten Metallplatten (3, 4) sicherzustellen,
- das Winkelprofil (12) dann im montierten Zustand die zweite Platte (4) über die zweite Isolierplatte (6) hinaus derart verlängert, dass der zweite Schenkel des Winkelprofils einen Teil der zweiten Fläche des Falzes (11) bildet, und dass der erste Schenkel des Winkelprofils (12) zumindest einen Teil der ersten Fläche des Falzes (11) bildet,
- wobei gegebenenfalls der zu öffnende Teil (2) zumindest eine Unterbrechung einer Wärmebrücke aufweist.

2. Tür nach Anspruch 1, **dadurch gekennzeichnet, dass** die thermische Isolation durch einen Hohlraum gebildet ist und aus Luft (7) besteht, die in dem Traggerüst (3, 4) eingeschlossen ist.

3. Tür nach Anspruch 1, **dadurch gekennzeichnet, dass** die thermische Isolation eingebracht ist und aus Steinwolle oder Glaswolle oder einem anderen Material mit geringer Wärmeleitung oder Wärmediffusion besteht, die zumindest teilweise den Hohlraum füllt.

4. Tür nach einem der Ansprüche 1 bis 3, **dadurch gekennzeichnet, dass** eine Verstärkungsstruktur, die beispielsweise durch starre Metallstangen, vorzugsweise mit einem Omega-förmigen Querschnitt, gebildet ist, in dem Hohlraum des Traggerüstes (3, 4) angeordnet und festgehalten ist und sich gegebenenfalls den Hohlraum mit der thermischen Isolation teilt und mit der letzten verbunden oder in diese integriert ist.

5. Tür nach einem der Ansprüche 1 bis 4, **dadurch gekennzeichnet, dass** eine Schicht aus Material, die zur Bildung eines Hindernisses für die von der ersten oder der zweiten Hauptfläche (2') oder (2") ausgehenden Wärmestrahlung ausgebildet ist, beispielsweise durch Aufspritzen oder Aufsprühen auf die eine und/oder die andere der jeweiligen Innenflächen der ersten und zweiten Metallplatten (3) und (4) aufgebracht ist.

6. Tür nach einem der Ansprüche 1 bis 5, **dadurch gekennzeichnet, dass** die Außenfläche der ersten Isolierplatte (5) durch eine metallische Verkleidung oder erste Verkleidung (8), vorzugsweise aus Metallblech, zum Schutz dieser ersten Isolierplatte abgedeckt ist und die Außenfläche der zweiten Isolierplatte (6) durch eine metallische Verkleidung oder zweite Verkleidung (9), vorzugsweise aus Metallblech, zum Schutz dieser zweiten Isolierplatte abgedeckt ist.

7. Tür nach einem der Ansprüche 1 bis 6, **dadurch gekennzeichnet, dass** jede Isolierplatte (5) oder (6) zur Aufnahme oder zum Halten von Wasser ausgebildet ist, das im Fall der Einwirkung eines Feuers auf die eine Seite der Tür die von der letzteren abgegebenen Wärme absorbieren kann und als solches ein zusätzliches Hindernis gegen die Ausbreitung von Wärmestrahlung von der beaufschlagten Seite auf die nicht beaufschlagte Seite bildet.

8. Tür nach Anspruch 7, **dadurch gekennzeichnet, dass** die erste Platte (3) seitlich verlängert ist, um den verbleibenden Teil der Kante (2"') abzudecken, und dass gegebenenfalls einerseits die erste Verkleidung (8) im Bereich des verbleibenden Kantenteils (2"') die erste Platte (3) über eine erste Dichtung und Unterbrechung einer thermischen Brücke (13) abdeckt, wodurch eine erste Unterbrechung der thermischen Brücke sichergestellt wird, und andererseits die zweite Verkleidung (9) im Bereich der zweiten Fläche des Falzes (11) den zweiten Flügel des Winkelprofils (12) über eine zweite Dichtung und Unterbrechung der Wärmebrücke (14) abdeckt, wodurch eine zweite Unterbrechung einer Wärmebrücke sichergestellt wird.

9. Tür nach einem der Ansprüche 1 bis 8, **dadurch gekennzeichnet, dass** die Innenkante der ersten Fläche des L-förmigen Falzes (11) einen rückwärts gerichteten Teil (15) aufweist, der vorzugsweise im Wesentlichen aus dem gleichen Isoliermaterial hergestellt ist, wie die erste und zweite Isolierplatte (5) und (6), wobei der rückwärts gerichtete Teil (15) in einer Entfernung von der zweiten Fläche des Falzes (11) derart angeordnet ist, dass ein Raum zur quetschungsfreien Aufnahme und zum Aufrechterhalten der Form zwischen dem rückwärts gerichteten Teil (5) und der zweiten Fläche des Falzes (1) für eine Dichtung und Isolation (17) verbleibt, vorzugsweise aus Neoprenschaum aus synthetischen Kautschuk oder irgendeinem anderen zellenförmigen Schaum, der insbesondere gegen Feuer beständig ist.

10. Tür nach Anspruch 9, **dadurch gekennzeichnet, dass** der Abschnitt des feststehenden Teils (1), der gegenüberliegend zu der ersten Fläche des Falzes (11) angeordnet ist, eine aufquellende Dichtung (16) aufweist, wobei der rückwärts gerichtete Teil (15) dann mit dem Abschnitt des feststehenden Teils (1), auf dem diese aufquellende Dichtung (16) angeordnet ist, ein Spiel für eine maximale Ausdehnung des letzteren begrenzt, was eine Begrenzung im Fall der Einwirkung eines Feuers auf die Tür das Aufquellen der Dichtung (16) und die Verhinderung seiner Beschädigung ermöglicht.

11. Tür nach einem der Ansprüche 1 bis 10, **dadurch gekennzeichnet, dass** der feststehende Teil (1) metallisch, vorzugsweise aus Stahl, oder aus irgendeinem anderem Material hergestellt ist, das seine Steifigkeit sicherstellt, und eine sichtbare Fläche auf einer der Seiten der Tür im geschlossenen Zustand dieser letzteren aufweist, die zumindest teilweise über ihren gesamten oder einen Teil ihres Umrisses der Öffnung der Tür und insbesondere in dem Fall, in dem der zu öffnende Teil (2) und der feststehende Teil (1) jeweils einen komplementären Falz (11) und (11') aufweisen, eine Schicht aus Isoliermaterial (1') aufweist, die eine thermische Isoliereigenschaft besitzt.

## Claims

1. Watertight fire door for closing an opening in a building or edifice comprising, on the one hand, a fixed frame (1) and at least one opening leaf (2) mounted pivotably on the latter by means of at least one hinge (10), comprising two large faces (2', 2") opposite one another and in parallel, namely a first large face (2') and a second large face (2") and being delimited laterally by small faces (2"') forming the edge of the opening leaf (2) which are perpendicular to said large faces and, on the other hand, sealing means (16, 17) for providing a seal between said fixed frame and opening leaf in the closed state of the door, **characterised in that**:
- the or each opening leaf (2) comprises a central metal framework (3, 4) surrounding an empty space for receiving or forming a thermal insulation (7) and being held between two thermal insulating panels (5, 6), namely a first panel (5) located on the side of the first large face (2') and a second panel (6) located on the side of the second large face (2"), each comprising two large sides extending, in the mounted state, parallel to said large faces and small sides extending parallel to the edge (2"') of the opening leaf and being made from a material of low conductivity or thermal diffusivity such as for example, a composite material or mineral material, preferably made of calcium silicate,
- said panels (5, 6) are able to prevent, in case of expose to fire of one of said large faces (2', 2"), the propagation of heat from the latter to the other of the said large faces (2', 2"),
- the central framework (3, 4) is formed by two rigid metal plates (3) and (4), preferably made of steel plate, held spaced apart from one another, parallel to one another and to the first and second large faces (2', 2") of the opening leaf (2), so as to leave an empty space between the latter to form or receive the thermal insulation (7), namely a first plate (3) located on the side of the first large face (2') and a second plate (4) located on the side of the second large face (2") of the opening leaf (2), the first panel (5) covering the external face of the first plate (3) and the second panel covering the external face of the second plate (4),
- the large sides of the first panel (5) have greater dimensions than those of the large sides of the second panel (6) such that, in the mounted state, the first panel (5) extends laterally beyond the second panel (6), which has the effect of forming a rebate (11) in the edge (2"') of the opening leaf (2), on the side of the second large face (2") of the opening leaf (2), said edge (2"') then comprising in succession from the second large face (2"), said rebate (11) and a remaining part of the edge (2"') joining the said rebate (11) to the first large face (2'), said rebate (11) having an L profile comprising a first face parallel to said large faces (2', 2") of the opening leaf (2) and a second face perpendicular to the first and second large faces (2', 2") of the opening leaf (2), said rebate (11) being provided to receive the fixed frame (1), which comprises a complementary rebate (11') during the closure of the door,
- the second plate (4) extends laterally by an angle bar or an L-shaped angle bracket (12) comprising a first wing and a second wing, the first wing being attached and fixed to the internal face of the first plate (3) so as to ensure the assembly between said first and second metal plates (3, 4),
- said angle bar (12) then lengthens, in the mounted state, the second plate (4) beyond the second panel (6) such that the second wing of the angle bar forms a part of the second face of the rebate (11) and the first wing of the angle bar (12) forms at least a part of the first face of the rebate (11),
- if necessary the said opening leaf (2) comprises at least one thermal break.

2. Door according to claim 1, **characterised in that** the thermal insulation is formed by the empty space and consists of air trapped in said framework (3,4).

3. Door according to claim 1, **characterised in that** the thermal insulation is attached and is made of rock wool or glass wool or another material with low conductivity or thermal diffusivity filling the empty space at least partially.

4. Door according to any one of claims 1 to 3, **characterised in that** a reinforcing structure formed for example by rigid metal bars, preferably with an omega-shaped cross section, is arranged and fixed in the empty space of the framework (3, 4), if necessary, sharing said empty space with the thermal insulation or being integrated into the latter.

5. Door according to any one of claims 1 to 4, **characterised in that** a layer of material capable of obstructing the heat radiation coming from the first or the second large face (2') or (2") is applied for example by spray-coating or projecting onto one and/or the other of the respective internal faces of the first and second metal plates (3) and (4).

6. Door according to any one of claims 1 to 5, **characterised in that** the external face of the first panel (5) is covered by a metal facing or first facing (8), preferably made of steel plate, for protecting said first panel and the external face of the second panel (6) is covered by a metal facing or second facing (9), preferably made of steel plate, for protecting said second panel.

7. Door according to any one of claims 1 to 6, **characterised in that** each insulating panel (5) or (6) is able to contain or retain water which is able to absorb, in the case of exposure to fire of one of the sides of the door, the heat given off by the latter, and to form therewith an additional obstacle to the propagation of heat from the exposed side to the non-exposed side.

8. Door according to claim 7, **characterised in that** the first plate (3) extends laterally to cover the remaining part of the edge (2"') and **in that**, if necessary, on the one hand, the first facing (8) covers at said remaining part of the edge (2"') the said first plate (3) by means of a first seal and thermal break (13) ensuring a first thermal break and, on the other hand, the second facing (9) covers at the second face of the rebate (11) the second wing of the angle bar (12) by means of a second seal and thermal break (14) ensuring a second thermal break.

9. Door according to any one of claims 1 to 8, **characterised in that** the internal edge of the first face of the rebate (11) in an L-shape comprises a return (15), preferably made essentially from the same insulating material as the first and second panels (5) and (6), said return (15) being located at a distance from the second face of the rebate (11) so as to leave an anti-crushing housing space which makes it possible to accommodate and keep in shape, between the said return (15) and the second face of the rebate (11), a seal and insulation (17), preferably made of synthetic foam neoprene rubber or another cellular foam that is resistant to fire in particular.

10. Door according to claim 9, **characterised in that** the part of the fixed frame (1) located opposite the first face of the rebate (11) comprises an intumescent seal (16), the return (15) then delimiting with the part of the fixed frame (1) onto which the intumescent seal (16) is fixed a maximum expansion play of the latter, making it possible to limit, if the door is exposed to fire, the swelling of said seal (16) and prevent its disintegration.

11. Door according to any one of claims 1 to 10, **characterised in that** the fixed frame (1) is made of metal, preferably made of steel, or made from any other material ensuring its rigidity, and comprises a visible face on one side of the door, in the closed state of the latter, which is covered at least partially over all or part of the periphery of the door opening, more particularly if the opening leaf (2) and the fixed frame (1) each comprise a complementary rebate (11) and (11'), with a layer of insulating material (1') providing thermal insulation.
